# EUROPEAN PATENT APPLICATION

(11) **EP 4 629 053 A1**
(43) Date of publication of application: **08.10.2025**
(21) Application number: 24168738.3
(22) Date of filing: 05.04.2024
(51) Int. Cl.: G06F 3/16

(54) **SYSTEMS AND METHODS FOR ADJUSTING CONFIGURATIONS BASED ON INTERPRETED USER INTENT**

(71) Applicant: Bang & Olufsen A/S, 7600 Struer (DK)
(72) Inventor: MARTINEZ-NUEVO, Pablo, Lyngby (DK); LLUIS SALVADO, Francesc, Lyngby (DK); FRANCOMBE, Jon, Lyngby (DK); GULDAGER, Emil Kongsgaard, Lyngby (DK)
(74) Representative: Worley, Alexander John

(57) **Abstract**

The present disclosure relates to systems and methods that use artificial intelligence to interpret user intent in commands to adjust device configurations. An example system includes an artificial intelligence (Al) system configured to receive user input related to operation of an output device, determine at least one user intent from the user input, and send a communication to the output device to cause the output device to implement at least one instruction based on the determined at least one user intent.

## Description

### TECHNICAL FIELD

The present disclosure generally relates to control of devices, and more particularly to using artificial intelligence to interpret user intent in commands to adjust device configurations.

### BACKGROUND

Setting up, programming, and adjusting the configurations of electronic devices can be complex. In some use cases, such as home automation and audio systems, the settings or configurations of devices may be related or cascaded. For example, a user may wish for entry lights to turn on and music to begin playing when an entry door or garage door is opened.

In other use cases, the settings and configurations of devices can be complex. For audio devices like speakers, soundbars, and wearables (e.g., headphones and earphones), there can be a multitude of options (e.g., volume; equalization settings such as bass, midrange, and presence/sibilance; directivity settings; spatial audio effects/processing; speech intelligibility preferences) that use specific terminology or provide some level of expert control that may be familiar to musicians or audiophiles but unknown or even intimidating to an average layperson user.

### SUMMARY

There is a need to simplify the setup and control of electronic devices like home automation and audio systems.

In general, the present disclosure details example devices, systems, and techniques that use artificial intelligence to interpret user intent in commands to adjust device configurations.

An example system includes an artificial intelligence (AI) system configured to receive user input related to operation of an output device, determine at least one user intent from the user input, and send a communication to the output device to cause the output device to implement at least one instruction based on the determined at least one user intent.

An example method includes receiving user input related to operation of an output device; applying an artificial intelligence (AI) large language model (LLM) to the user input to determine at least one user intent for control of the output device from the user input; and sending a communication to the output device to cause the output device to implement the determined at least one user intent.

The above summary is not intended to describe each illustrated example or every implementation of the subject matter hereof. The figures and the detailed description that follow more particularly exemplify various aspects in accordance with this disclosure.

### BRIEF DESCRIPTION OF THE DRAWINGS

Subject matter hereof may be more thoroughly understood in consideration of the following detailed description of various examples in connection with the accompanying figures, in which:
FIG. 1 is a block diagram of an artificial intelligence-enabled system according to an embodiment.
FIG. 2 is a block diagram of an AI system component of the system of FIG. 1, according to an embodiment.
FIG. 3A is a diagram of an acoustic visualization according to an embodiment.
FIG. 3B is another diagram of the acoustic visualization of FIG. 3A, according to an embodiment.
FIG. 4 is another diagram of an acoustic visualization with expert classifications according to an embodiment.
FIG. 5A depicts an app operating on a smart phone according to an embodiment.
FIG. 5B is another depiction of the app operating on the smart phone of FIG. 5A.
FIG. 6 is a flowchart of a method according to an embodiment.

While various examples are amenable to various modifications and alternative forms, specifics thereof have been shown by way of example in the drawings and will be described in detail. It should be understood, however, that the intention is not to limit the claimed inventions to the particular examples described. On the contrary, the intention is to cover all modifications, equivalents, and alternatives falling within the spirit and scope of the subject matter of the present disclosure.

### DETAILED DESCRIPTION

The present disclosure is directed to systems and methods for the configuration and adjustment of settings on various devices or in various systems, such as home automation devices and systems; audio, video, and audio-visual (A/V) devices and systems; automotive devices or systems; and other applications. In various embodiments, a specially trained artificial intelligence-enabled system interprets user intent from instructions provided by a user, or inputs provided by sensors or other devices, to the system in order to adjust a setting or configuration of one or more other systems and devices. In a particular embodiment, a chatbot powered by AI (artificial intelligence), or another AI engine, can be utilized for more intuitive and convenient interaction by users with audio settings. Example audio settings can include equalization control available directly on a device, or for a device via a wired or wirelessly coupled application or "app" operating on a smart phone, tablet, computer, embedded computer in a device like a speaker, vehicle, or virtually any device that comprises a processor with software or firmware, wearable (such as headphones, earphones, a smart watch, smart jewelry, a virtual reality headset, an augmented reality headset, or any other wearable garment or item), or other device (generally referred to herein as a "computing device"). These and other embodiments and examples can be better understood considering the following discussion referencing the drawings.

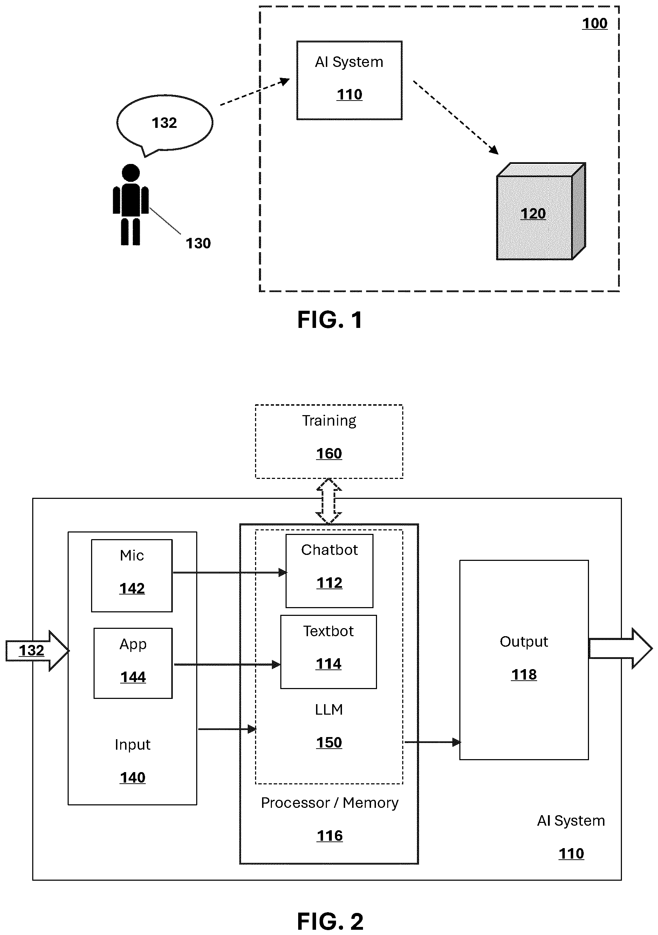

Referring to FIG. 1, an embodiment of a system 100 according to at least one embodiment of this disclosure is depicted. According to this embodiment, system 100 comprises a specially trained artificial intelligence (AI) system 110 in communication with at least one output system or device 120. Though it can be either or both of a system or device (or systems or devices) in various embodiments and implementations, output device 120 will be referred to in this discussion for convenience and consistency.

AI system 110 can receive instructions or commands 132 related to output device 120 or from a user (or multiple users) 130, or user 130 can interact with system 100 in other ways as discussed herein. For example, user 130 can interact with system 100 by providing commands 132 to AI system 110. Referring also to FIG. 2, commands 132 can be spoken/verbal, such as said aloud and detected by a microphone 142 or other input component 140 of AI system 110. Commands 132 also can be voice-to-text or typed in an application ("app") 144 that operates on a computing device and is communicatively coupled with AI system 110 to provide commands 132 thereto. App 144 can be mobile, desktop, dashboard, or provided for interaction with a user via some other interface, and typing, text, voice-to-text, or some other entry mode of commands 132 can be accomplished by user 130 via any user interface feature of a device on which app 144 resides, operates, or is otherwise presented to user 130.

In this and other embodiments, input component 140 can also include one or more cameras, sensors, or other devices or modalities that can provide data or information for use by or within AI system 110. In some embodiments, input component 140 can be enabled via or provided by app 144, such as a camera or QR code reader on a mobile phone on which app 144 operates. In some embodiments, commands 132 can be provided by direct voice interaction with a speaker or other device, such as one that includes a microphone and native software or firmware, which can operate directly on the speaker or other device, without an external app or separate smart device.

In this as well as other example embodiments, AI system 110 can be considered to be or comprise a chatbot 112, a textbot 114, or both - or, generally speaking herein, a large language model (LLM) 150. In some embodiments, chatbot 112 and textbot 114 are not distinct elements of a processor/memory component 116 of AI system 110 and are one and the same, with the diagram of FIG. 2 representing some functional aspects instead of or in addition to only structure.

LLM 150 can be proprietary in some examples. In others, LLM 150 can use, comprise, or be based on available AI language or other applicable models, such as CHATGPT, GOOGLE BARD, JASPER, COPILOT, YOUCHAT, CHATSONIC, HIX.AI, BING, CLAUDE, PERPLEXITY AI, AUTO-GPT, COPY.AI, MISTRAL, or another AI model or framework, including those which may become available in the future. In one embodiment, LLM 150 can use proprietary data, such audio data from the Applicant of this disclosure or another user. One particular example by the Applicant is "TEXT-TO-BEOSONIC," which is discussed herein below. In general, embodiments can use an underlying AI language model, as-is or customized, in order to implement advanced prompting, fine tuning, or other ways of customizing, such as are discussed herein.

In other embodiments, and as previously mentioned, commands 132 can instead or additionally comprise written text. In these embodiments, user 130 can provide written commands 132 via a mobile phone, tablet, or computer, or some other device, directly or indirectly. "Directly" can comprise typing a text message on a messaging application running on the computing device, typing or selecting text or a command in an application running on the computing device, or providing written or typed text in some other way in which text is formulated via a keyboard, keypad, touchscreen, or other input device. "Indirectly" can comprise speaking into the computing device (e.g., a mobile phone) such that the user's speech is converted to text by the computing device and then communicated as a textual command to AI system 110.

A significant advantage of these and other embodiments is that user 130 can simply describe in free speech or text (i.e., normal language as written or spoken, with or without technical terms or jargon) how user 130 would like output device 120 to respond or behave. In other words, user 130 may express themselves in ordinary, non-"expert" language or terms and have output device 120 respond as if "expert" terminology or instructions had been provided or direct manipulation of the parameters to be adjusted had been performed by an expert. Of course, user 130 may also use expert language, or a mix of lay person and expert terminology.

In an embodiment in which output device 120 comprises an audio speaker or system, user 130 may state how they would like the sound to be reproduced. For instance, if user 130 says something like "cozy coffeeshop in Copenhagen" as command 132, chatbot 112 of AI system 110 would infer that warm and relaxed sound parameters are the most appropriate for that ambiance. If user 130 types "rave in Berlin," textbot 114 may infer that loud and energetic sound parameters with lots of bass are desired. In yet another example, user 130 can also express an issue they have with the sound, such as "I don't understand what they're saying" or "the sound is fuzzy." Chatbot 112 can then adjust the settings of output device 120 to be clearer and to have improved speech intelligibility.

In one particular implementation of these embodiments, output device 120 comprises a BANG & OLUFSEN (Applicant's) speaker or device communicatively coupled and controllable by BEOSONIC, an app-based tool by Applicant that allows users to adjust the sound of BANG & OLUFSEN products to their preferences. BEOSONIC uses advanced digital sound algorithms to allow user 130 to explore and choose different audio spaces and profiles. One particular implementation of BEOSONIC is TEXT-TO-BEOSONIC.

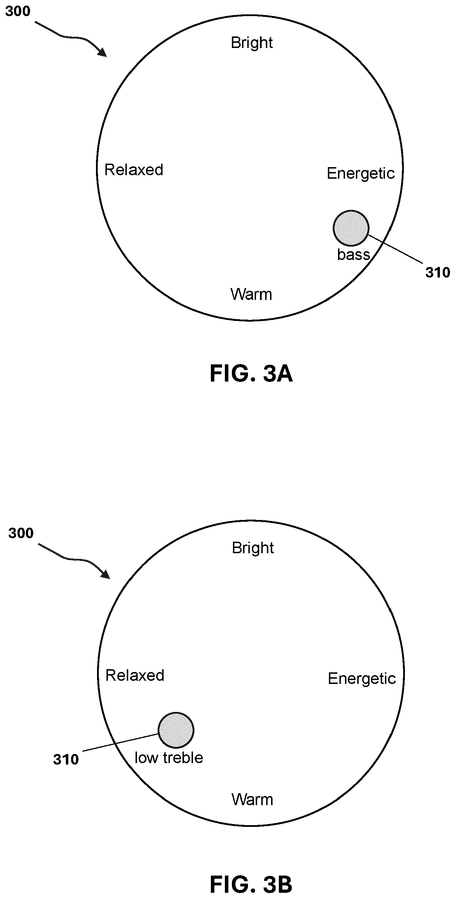

Returning to the example above in which "cozy coffeeshop in Copenhagen" is the desired audio space of user 130, FIG. 3A shows an example BEOSONIC wheel 300. BEOSONIC wheel 300 is an example two-dimensional acoustic visualization and includes a selector 310 that can be positioned around BEOSONIC wheel 300 to enable a desired audio space or settings. In FIG. 3A, the sound output would be energetic and warm, with more bass. If command 132 provided by user 130 to chatbot 112 of AI system 110 is "cozy coffeeshop in Copenhagen," AI system 110 can extract perceptual audio (or other) attributes from free speech or text from user 130 and transform these attributes into settings on BEOSONIC wheel 300.

LLM 150, which can be implemented by processor/memory component 116 of AI system 110 in one embodiment, can be trained with curated, expert prompts and data by training module 160 such that LLM 150 is able to interpret and reason incoming free speech as commands 132. LLM 150 can receive free speech or text, associate the content of the speech or text with one or more attributes of audio perception, and manipulate selector 310 to points on BEOSONIC wheel 300 to convert the one or more attributes to audio characteristics of output device 120. Thus, for "cozy coffee shop in Copenhagen," LLM 150 would reason that a warm and relaxed sound environment is desired and, referring also to FIG. 3B, cause selector 310 on BEOSONIC wheel 300 to reposition as shown, with lower treble output of output device 120 associated with a warm and relaxed sound atmosphere.

The training of LLM 150 by training module 160 can be recursive and ongoing using machine learning techniques, such that LLM 150 "learns" additional terms, phrases, or even user-specific preferences and language in order to become more adept at free speech or other command 132 implementation. In some embodiments, LLM 150 can learn a particular user 130 or setting. For example, training module 160 or LLM 150 - or AI system 110, more generally speaking - can be authorized to learn from other data available from or about user 130, such as in an embodiment in which BEOSONIC is used and has access to data on a smart phone or other mobile device of user 130. For example, AI system 110 can detect at some time that user 130 is in a coffeeshop in Copenhagen and listening to music and record the settings and environment as data in processor/memory 116. Then, when user 130 prompts AI system 110 to reproduce this environment later when at home in another city or country, LLM 150 can use this data in addition to other expert data and training from training 160 to implement the requested environment.

In another example, user 130 can provide feedback to AI system 110 with respect to whether the settings chosen or output reproduced by output device 120 are as desired or otherwise liked by user 130. From this AI system 110 can sequentially learn what a particular user 130 or group of users 130 in a setting or environment like and apply this learning to refine further settings or outputs or to make requested or proactive recommendations or suggestions to user 130.

In the example in which user 130 says, "I don't understand what they're saying," BEOSONIC wheel 300 can move selector 310 closer to "Bright," thus reducing bass levels and emphasizing treble for clearer speech reproduction, often referred to as speech intelligibility. If user 130 provides additional instruction to refine the setting, LLM 150 can learn from this in order to provide more accurate instructions to output device 120 in the future.

Thus, user 130 is able to more easily and intuitively choose and express the desired sound to be reproduced. Being able to use free, or "normal" or "conversational," speech or text as opposed to technical audio terminology or jargon can make the audio experience easier and more appealing to user 130. Training LLM 150 by training module 160 and ongoing machine learning to implement free speech in this way can provide a high impact on improved user experience with relatively low effort, and it can accommodate a variety of different characteristics and settings. In the examples above, bass and treble are primarily used, as well as considering intelligibility. Other examples can also or instead use reverb, compression, spatial image, width, distance, user position, acoustics of an environment, real-time audio input/feedback (e.g., road or wind noise in a moving vehicle), and other characteristics or settings.

In some embodiments, auto-tagging (e.g., extracting information about the content that is or is to be reproduced) can be used by training module 160 and LLM 150, or in some situations LLM 150 can be trained by or for a particular user 130. For example, LLM 150 can be trained to implement or recognize themes (e.g., pop, Latin), genres (e.g., Broadway, rock, classical), places (e.g., orchestra hall or stadium), instruments (e.g., piano, flute, drums), moods (e.g., relaxed, energetic, study), or other tags. More subjective descriptions also can be used or learned by AI system 110, such as "hard rock instrumental with heavy drum rolls, distorted guitar riffs, and bass." In yet further embodiments, external information such as data viewing histories from the Internet, in particular social media, can be used, for example "make it sound more like a Taylor Swift concert" or "more bass like that meme about sea shanties on TIK TOK."

Embodiments of LLM 150 also can recognize and correct inaccuracies or errors in commands 132 entered by users, such as typographical errors in text entered and homophones ("base" instead of "bass"). In some embodiments, LLM 150 can learn from these errors and corrections in order to refine results provided going forward.

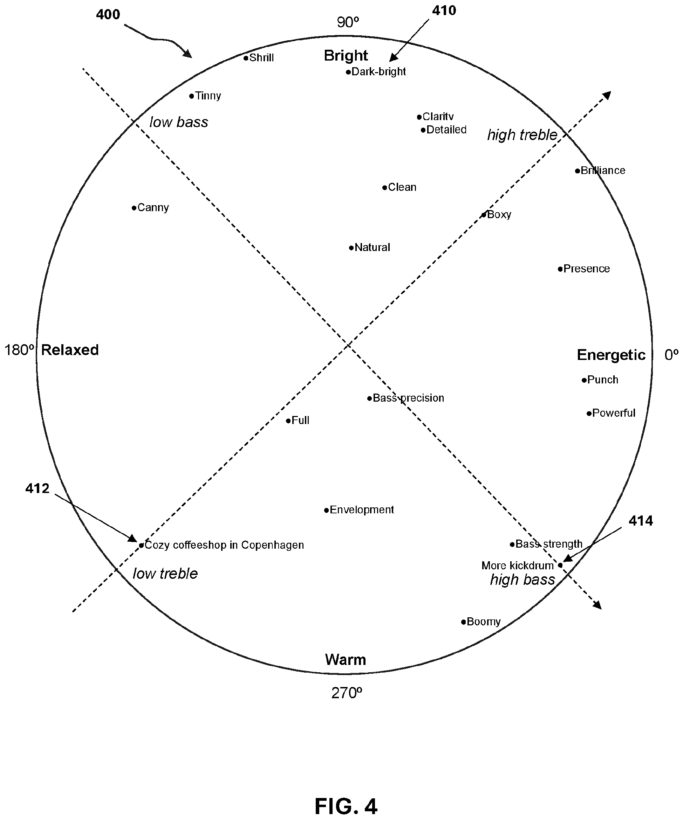

Referring to FIG. 4, another depiction of a multi-dimensional acoustic visualization 400 is included, with various expert data descriptors shown relative to the previously illustrated Bright, Warm, Relaxed, and Energetic descriptors. Acoustic visualization 400 of FIG. 4 can be compared, in one example, with a two-dimensional circle or wheel of radius one where each coordinate in the circle corresponds to some sound parameter(s). A wheel depiction is merely one example, with the broader concept being a multi-dimensional acoustic visualization that represents or encodes a variety of acoustic setting presets. A professional Tonmeister has already associated some polar coordinates (corresponding to sound parameters) with words, which can be applied in embodiments here. Polar coordinates represent each point in the circle using a distance and an angle in degrees in the following way: [distance, angle]. For example, a Tonmeister has made the following associations:
- Coordinate [1, 0]: "Energetic,"
- Coordinate [1, 45]: "High treble"
- Coordinate [1, 90]: "Bright"
- Coordinate [1, 135]: "Low bass"
- Coordinate [1, 180]: "Relaxed"
- Coordinate [1, 225]: "Low treble"
- Coordinate [1, 270]: "Warm"
- Coordinate [1, 315]: "High bass"

Considering the words associated to the hard boundaries of the circle of acoustic visualization 400, LLM 150 can be trained or programmed to return a coordinate in the form [distance, angle] within the circle that better associates with the following sentence "cozy coffeeshop in Copenhagen." Thus, based on the given associations, the words "cozy coffee in Copenhagen" can be associated with a sound parameter that is warm and relaxed. Therefore, a coordinate within the circle of acoustic visualization 400 that better associates with this sentence could be [0.8, 225], shown at 412 in FIG. 4.

It should be understood that the coordinates provided by the Tonmeister and depicted in FIG. 4 are just for reference, but in some embodiments of AI system 110, LLM 150 can provide a prediction from free speech or text that contains a distance between 0 and 1 and an angle between 0 and 360 degrees. Converting free speech or text from a user into a [distance, angle] position on acoustic visualization 400 can provide a more precise and reproducible output setting determination in some embodiments.

Considering one particular descriptor, dark-bright 410, Tables 1 and 2 below are included as examples.

**Table 1: "Dark-Bright" Descriptor**

| descriptor | "dark-bright" |
|---|---|
| angle | 90 |
| distance | 1 |
| free speech/text | *See Table 2* |

In Table 1, the angle of this example, dark-bright 410, on acoustic visualization 400 is 90 degrees, and the distance is 1. In other words, LLM 150 would recognize that "dark-bright" is very similar and relates to Bright on acoustic visualization 400.

**Table 2: Free speech/text for "dark-bright"**

| **Dark-bright** |
|---|
| *Too bright because spectral balance isn't right* |
| *A bit too bright, not full in the middle... sounds a little thin to me* |
| *Slightly thin sound (although this gives good clarity)* |
| *A little bright* |
| *Sounds fairly bright* |
| *It's a bit dull in the center... but at least the Ss and Ts are under control* |
| *It's a bit dull in the center*, *which makes the voice sound kind of covered* - *but at least the Ss and Ts are under control* |
| *Treble and very high end are missing a bit (glass breaking was a bit dull)* |

**Table 3: Free speech/text for "poor bass"**

| **Poor bass** |
|---|
| *Very low end is missing* |
| *Bass is too boomy and covers a lot of the details* |
| *It seems like there is a bass frequency that is attenuated (a resonance)* |
| *I want a bit more bass extension*/*depth from the kick drum* |
| *Bass level and low cutoff not adequate to make the movie impressive* / *exciting Lots of midrange clanking and not much explosive oomph.* |
| *Seemingly no bass* |
| *Missing bass capability, movie content like this requires even more capability, so it lacks even more* |
| *Bass is not loud enough to make the presentation exciting* |
| *Bass extension is not great* |

In Table 3, example free speech or text phrases, terms, or sentences expertly associated (or for which LLM 150 is otherwise trained by training module 160 to associate) with poor, low (i.e., missing), or undesirable bass are shown. Therefore, if user 130 were to say the current audio output of output device 120 "seems to have no bass," LLM 150 would associate this with a desire by user 130 for increased bass or deeper bass sound and would adjust acoustic visualization 400 and thereby the audio output of output device 120 accordingly.

Table 4 includes example free speech or text phrases, terms or sentences related to a level of envelopment. In audio terminology, envelopment refers to an extent or degree to which an audio signal is perceived to be all around a listener or user. Here, if user 130 were to say the current audio output of output device 120 is "still all in front of me and I don't feel enveloped," LLM 150 would associate this with a desire by user 130 for increased, improved, or more envelopment and would adjust the audio output of output device 120 accordingly.

**Table 4: Free speech/text for envelopment level**

| **Level of envelopment** |
|---|
| *Stable envelopment... Envelopment is there but not exaggerated* |
| *Didn't feel enveloping, didn't get the wrap-around effect* |
| *Some* envelopment |
| *Envelopment good, it feels like sound is coming from the sides of the room* |
| *Envelopment to the sides and back was missing* |
| *There's lots of* envelopment |
| *Still all in front of me, I don't, feel enveloped so much* |
| *Envelopment doesn't change much with lateral movement in listening position* |
| *Relatively wide image with some* envelopment |

In other words, a power of LLM 150 is that LLM 150 can associate something user 130 says to be close to something known, functioning in a general sense as a thesaurus. As shown by these examples, AI system 110 thereby implements user intent-to-acoustics, whether spoken, written, or otherwise input, in use and operation. As mentioned above, acoustic visualization 300/400 can be implemented in an app that can run on a smart phone, tablet, or other computing device.

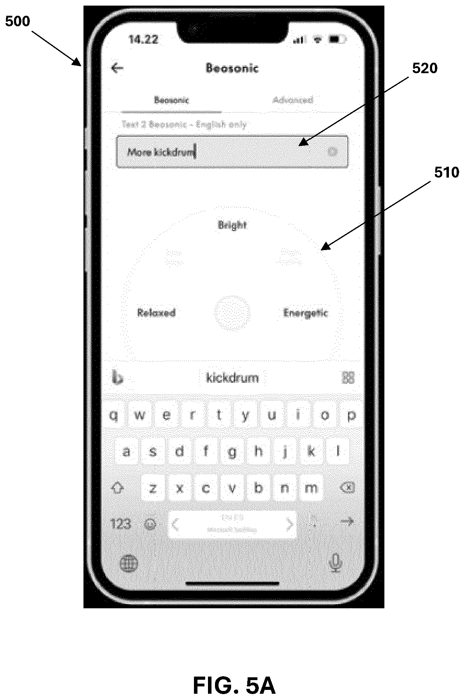

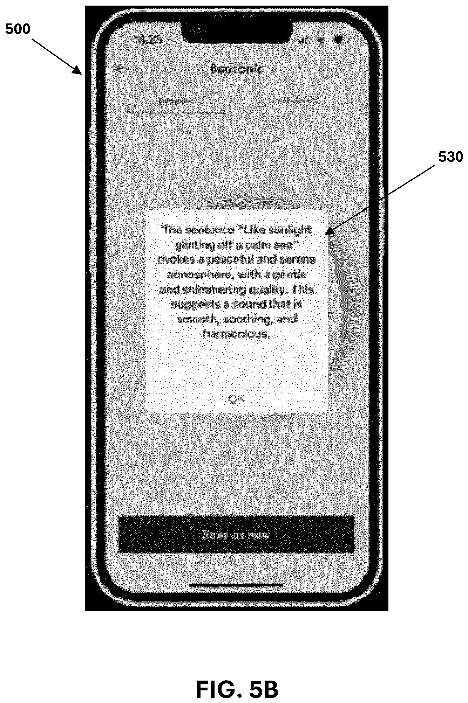

An example implementation of this is depicted in FIGS. 5A and 5B. In FIG. 5A, a smartphone 500 is shown, on which an example acoustic visualization of BEOSONIC wheel 510 is presented to a user within an app operating on smartphone 500. The user interface of the app includes a user input field 520 via which a user can type free text (or, depending on the user's phone and preferences, use speech-to-text). In this example, a user has entered "more kickdrum," which could be interpreted by AI system 110 as a desire for more bass or a higher bass level, such as at [0.9, 315], shown at 414 in FIG. 4.

In FIG. 5B, the user interface of smartphone 500 shows a chat response 530 from AI system 110 to the free text user input "like sunlight glinting off a calm sea." In this example, AI system 110 responds that this input "evokes a peaceful and serene atmosphere, with a gentle and shimmering quality. This suggests a sound that is smooth, soothing, and harmonious." Thus, AI system 110 may set or adjust output device 120 to be more relaxed, e.g., [0.85, 175] with respect to FIG. 4.

Just as the input can be human-like as free text or speech, chat response 530 provided by the app also can be human-like. In other words, AI system 110 can be programmed or trained to mimic human speech and conversational styles to provide a friendlier, less intimidating interaction with users than they may be used to when interacting with technology and high-end audio and other output devices 120. In one example associated with BEOSONIC wheel 510, chat response 530 can be BEOCHAT, a chat interface provided by BANG & OLUFSEN, the Applicant of this application.

AI system 110, in particular LLM 150, also can be trained or programmed to consider particular context related to certain audio playback situations, such as differentiating music from audio/visual content like television, movies, and other streaming content, or content that is purely or primarily speech or spoken words, like podcasts, news broadcasts, and audio books. In one example of free speech or text provided to AI system 110, user 130 says or types the following as command 132: "I want to hear the guitar more than the orchestra." There is significant and multi-factor context provided by this sentence, including that what user 130 is hearing is likely music (rather than, e.g., a podcasts) and that there are multiple instruments that can be heard, and that it is possible to differentiate the sounds associated with various instruments (a guitar) or combinations of instruments (an orchestra). Other example commands 132 like this that may apply to audio content that is or includes music include:
- "Richer bass guitar"
- "Add a powerful and resonant depth to the track"
- "make it more balanced without the vocals and lead instruments overshadowing the rest of the mix"
- "make the percussion feel more lively and pronounced"
- "it sounds too crispy"
- "it's too muddy"
- "I want to hear the kickdrum more"
- "deep resonant bass like a cinematic experience"
- "more presence and clarity"
- "I want to hear the vocals more"
- "I love a crisp, clear sound where the vocals stand out, and the instruments are well-defined but not too sharp"

For spoken content, like podcasts or audio books, user 130 may provide the following as command 132:
- "I can't understand what they're saying"
- "I can't hear him"
- "a more natural speech"
- "speech is way too sibilant"

LLM 150 of AI system 110 also can be trained to accept and act upon more abstract concepts, such as:
- "I want to hear the footsteps better"
- "a cinematic experience"
- "in a car"
- "infuse life into the entire composition"
- "make it like opening a window in a stuffy room"
- "a peaceful morning drinking tea on the porch"
- "reveal the delicate textures of the underlying harmonies"
- "sound like Barcelona"

Fundamentally, AI system 110 can be considered in some embodiments to be a translator of lay terms into expert or technical (e.g., acoustical) terms, or user intent into acoustic or other parameters. AI system 110 also can be sophisticated enough to include reasoning and context in interpretation of commands 132 in order to provide output as instructions (e.g., data or signals, wired or wireless) to output device 120. Thus, embodiments can make audio or audio/visual (A/V) experiences, in particular use of sophisticated and high-end audio or A/V systems, more intuitive, approachable, and easy for a user to access. These embodiments also can help users avoid the tedium often associated with adjusting, for example, multi-setting equalizers.

In still other embodiments, touch, body movement, body/skeletal position (e.g., seated, standing, lying down), or biometrics may be sensed or tracked by a sensor or camera of input component 140, or by a sensor or camera or other device intermediate user 130 and system 100, and provided to AI system 110. An intermediate device can be a mobile phone or tablet, a camera (such as one that is part of a home automation or security system), a light or lighting system, a computer or TV (including such a device comprising a camera or sensor), or some other device capable of detecting or receiving touch or movement as input and converting this input into a wired or wireless data or other signal that can be communicated to AI system 110. Thus, generally speaking, either the intermediate device or other component(s) of input component 140 or AI system 110 generally can comprise a camera or other type(s) of sensor(s). In a particular example, user 130 could raise an arm as command 132. In another example, a particular hand movement, such as moving from a fist to an open palm, may indicate some other type of command 132. In another particular example, a sensor of input component 140 can comprise one or more of a proximity or temperature sensor, an infrared sensor, a light detection and ranging (LiDAR) sensor, an ultra-wideband (UWB) sensor, an extremely high frequency (EHF) radar sensor, an inertial-measurement unit (IMU), or some other type or combination of these or other types of sensors.

In these and other examples in which sensors are used, sensor data can supplement or take the place of user intent expressed via speech or text. Therefore, user intent as input to AI system 110 can be either or both explicit (speech, text) and implicit (sensor data). User input of "the music is hard to hear" from a person driving a car along with sensor data indicating that a car window is open could cause the AI system to suggest or implement a change in volume and closing the window, while also adjusting the climate settings of the car. Additional multi-factor, implicit and explicit examples in automotive and home automation settings are included below.

In other words, commands 132 can be entered or conveyed to system 100 by any possible modality, e.g., by speaking out loud followed by speech-to-text, or by writing or typing, or by gesture recognition, or any other possible way of providing an instruction to a computer-enabled device like AI system 110. Speech can include voice recognition in households or settings in which multiple users may provide input to AI system 110. In another embodiment, text can include user recognition by way of detecting typing patterns, phrasing, or word choices. Put at a basic level, AI system 110 can use and learn from pattern recognition in various inputs provided thereto.

The concepts discussed herein also can be applied to video or visual systems, such as for adjusting the various options on home theater, television, projector, lighting, and the like. As previously mentioned, embodiments are also applicable to home automation and automotive systems and can be used for virtually any subsystem thereof, including lighting, comfort and climate control, driving modes (including for electric vehicles which may have sophisticated battery management settings and systems), vehicle settings, programming "smart" devices like lightbulbs, doorbells, security systems, HVAC systems and sensors, appliances (including stoves, dishwashers, grills, automated vacuums, and household or commercial robotic devices), clocks, timers, garage door openers, switches, outlets, cameras, and virtually any device or system with which a user can interact to set or change settings or outputs.

Embodiments can be suitable or trained for professional or enterprise environments as well. For example, A lighting designer setting up for a West End or Broadway show could instruct system 100," "I want it to feel more whimsical." A brewer preparing a new beer could say to system 100, "I want it to taste smokier." A retail store manager could enter "I want the atmosphere in the shop to feel more welcoming so everyone who comes in wants to buy something" into system 100. A football manager designing plays could instruct system 100, "I want the formation to strengthen our defense for the next game." These are only some possible examples of implementations and use cases of system 100. Generally speaking, system 100 can be used in almost any situation in which there is at least one parameter that could be selected, adjusted, or tweaked to achieve one or more goals, and a natural language to parameter interpreter (e.g., LLM 150) could help to optimize the one or more parameters.

Expanding on an example given above, AI system 110 and LLM 150 also can gather data and information from output device 120 and other sources, including cameras, microphones, sensors like weather apps and thermometers, wearable devices including smart watches and jewelry or medical devices. Data and information also can be sourced from LiDAR or other sensors or systems (including receiving data from multiple sensors or multiple sensor modalities), such as to determine a user position in a room, space, or environment, or to determine the size and shape of a room, space, or other environment. This can enable AI system 110 to determine an acoustic "sweet spot" in a space and the position of one or more users with respect thereto, or to know that a user is in a bedroom and listening to a podcast to wind down before sleeping, or to detect that a party is happening based on dance music and the presence of multiple people in a space or proximate a speaker as output device 120.

Particulars of output device 120 also can be considered by AI system 110. This can include differentiating output devices and settings such as a home speaker in a quiet living room, a vintage record player in a basement hangout space, rock music being played on mid-range automotive speakers on a gravel road, classical music being played in an electric vehicle on a highway, showtunes being played in a minivan with multiple passengers, a waterproof speaker being used in a shower, a speaker system used for background music in a restaurant during the day and a bar at night, etc. Therefore, instead or in addition to being able to translate user intent into acoustic settings or parameters, embodiments of AI system 110 can be considered to translate room or environment acoustics into acoustic settings or parameters.

This can be extrapolated to home automation systems, in which AI system 110 may be able to detect which lights are on or off, and at what brightness, and where a user is sitting, and consider all of this information when the user requests "better light for reading." Another home automation example can be "make it cozy for movie watching," which could involve AI system 110 turning off lights and closing blinds for a theater-like experience while leaving kitchen lights on in case a user gets up for a drink or snack, lowering the temperature several degrees because there are multiple users and they typically use blankets when watching the movie (detectable either via a camera if user permitted, or based on past experience when users have requested lower temperatures while viewing the TV), adjusting the brightness and angle of the TV, and customizing audio settings of the TV, speakers, or soundbar for the type of movie selected. As appreciated by those skilled in the art, data and information from multiple sources can be received, synthesized, processed, learned, and used in these and other examples.

Home automation also can include exterior features. For example, if the doorbell rings while a movie is playing, AI system 110 can pause the movie, turn on lights, and display a doorbell camera image on the TV or screen. If AI system 110 had input data indicating that a user had ordered food via a delivery service, AI system 110 could illuminate exterior lights for the delivery person in advance of their estimated arrival.

In embodiments in which output device 120 is an audio output device, output device 120 can be or include any number, arrangement, and type of speakers, such as (but not limited to) wall-mounted general-broadcast loudspeakers, fixed-location directional audio-beam speakers, mobile 360°-broadcast speakers (e.g., wireless Bluetooth speakers), mobile computing devices having an integrated speaker (e.g., smartphones, laptops, tablets, etc.), smart devices, speakers integrated into other devices like cars or appliances, headphones, earphones, wearables, and virtually any audio output devices.

In various embodiments, one or more audio parameters of output device 120 can be selected or controlled by AI system 110 so as to customize and improve the listening experience for the users. Audio parameters can include any or all of a direction of propagation of a beamed audio signal, an audio delay of an audio signal from a particular device, an activation or deactivation of an audio signal, an audio-compensation level, an equalization setting, or any other parameter associated with an audible signal. Embodiments may also be applied in object-based audio systems so that adjustments can be made at the object level as well as at the (rendered) channel level.

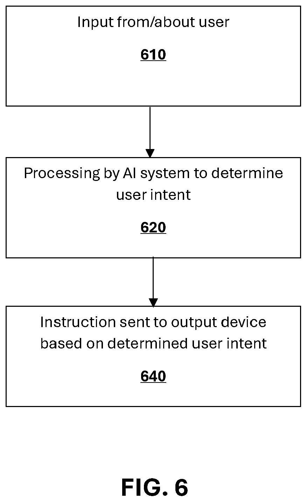

Referring to FIG. 6, a flowchart that generally applies to various methods and methodologies discussed herein (e.g., audio, automotive, home automation) is depicted. At 610, input from or related to a user or a user's environment is provided to an AI-enabled system. The instruction can be spoken, textual, sensor or other device data, or any other single or combined input from or related to a user, such as is discussed herein. At 620, the AI system processes the input in order to determine an explicit or implicit user intent, instruction, or action. At 640, the determined instruction or action is sent to an output device or system to be implemented.

Embodiments discussed herein aim to address the common challenges that users face in translating their sound or other settings preferences into specific sound reproduction or other output parameters. Retail customers or lay people may not have the expertise to do this and even if they do, the process can be tedious and often leads to dissatisfaction with the final audio or other output. To overcome this, embodiments of this disclosure introduce free speech or text interaction systems and methods, allowing users to describe their desired sound experiences or outputs naturally. These approaches not only simplify user interaction with these devices and systems but also provide sound reproduction or other output that can be uniquely customized for each user, providing an optimized listening or user experience.

Embodiments of systems and methods discussed herein can include or control processors and memory, such as processor/memory 116 in FIG. 2. Processor/memory 116 can be any programmable device that accepts digital data as input, is configured to process the input according to instructions or algorithms, and provides results as outputs. In an embodiment, processor/memory 116 can be or comprise a central processing unit (CPU) or a microcontroller or microprocessor configured to carry out the instructions of a computer program. Processor/memory 116 therefore can be configured to perform at least basic arithmetical, logical, and input/output operations.

Processor/memory 116 also can comprise volatile or non-volatile memory as required by the processor component to not only provide space to execute the instructions or algorithms, but to provide the space to store the instructions themselves. As non-limiting examples, volatile memory can include random access memory (RAM), dynamic random-access memory (DRAM), or static random-access memory (SRAM), for example. In some examples, non-volatile memory can include read-only memory, flash memory, ferroelectric RAM, a hard disk, or optical-disc storage.

System 100, including components thereof, can include other features, devices, and subsystems, such as an input/output engine or sound-processing engine, which can include various engines or tools, each of which can be constructed, programmed, configured, or otherwise adapted, to autonomously carry out a particular function or set of functions. The term "engine" as used herein is defined as a real-world device, component, or arrangement of components implemented using hardware, such as by an application-specific integrated circuit (ASIC) or field-programmable gate array (FPGA), for example, or as a combination of hardware and software, such as by a microprocessor system and a set of program instructions that adapt the engine to implement the particular functionality, which, during execution, transform the microprocessor system into a special-purpose device. An engine can also be implemented as a combination of the two, with certain functions facilitated by hardware alone, and other functions facilitated by a combination of hardware and software. In certain implementations, at least a portion, and in some cases, all, of an engine can be executed on the processor(s) of one or more computing platforms that are made up of hardware (e.g., one or more processors, data storage devices such as memory or drive storage, input/output facilities such as network interface devices, video devices, keyboard, mouse or touchscreen devices, etc.) that execute an operating system, system programs, and application programs, while also implementing the engine using multitasking, multithreading, distributed (e.g., cluster, peer-peer, cloud, etc.) processing where appropriate, or other such techniques. Accordingly, some or all of the functionality of processor/memory 116 can be carried out in a variety of physically realizable configurations across engines and should not be limited to any particular implementation exemplified herein, unless such limitations are expressly called out.

System 100 can include wired or wireless communication capabilities, such as between user 130 and AI system 110, AI system 110 and output device 120, and within any or all of a user device, AI system 110, or output device 120. The wired or wireless communications can be configured to provide two-way data communication with or via a data network, such as via input 140 and output 118. Additionally or alternatively, input 140 or output 118 can include a port (e.g., Ethernet, USB, power) for providing two-way data communication with a network via a wired connection. Such configurations provide for the advantage that components of system 100 can be configured as "no setup" devices, i.e., system 100 or a device therein can automatically detect nearby audio or other devices as discussed herein and communicate relevant parameter information to these devices without requiring an extensive manual setup and calibration process. The specific design and implementation of input 140, output 118, and processor/memory 116 can depend on the communications network(s) via which AI system 110 or devices are intended to operate.

Accordingly, this disclosure includes the following clauses:
Clause 1: A system comprising:
   an artificial intelligence (AI) system configured to:
   receive user input related to operation of an output device,
   determine at least one user intent from the user input, and
   send a communication to the output device to cause the output device to implement at least one instruction based on the determined at least one user intent.
Clause 2: The system of clause 1, wherein the AI system comprises a large language model (LLM).
Clause 3: The system of clause 2, further comprising a training module communicatively coupled with the LLM to provide training input to the LLM, wherein the LLM is further configured to use the training input to determine the at least one user intent from the user input.
Clause 4: The system of any of clauses 1-3, wherein the user interacts with the AI system via an application presented via a computing device, wherein optionally the computing device is a smart phone, a laptop, a computer, a tablet, a smart device, or a wearable device.
Clause 5: The system of clause 4, wherein the user input is provided as one of free text or speech to the application.
Clause 6: The system of clause 5, wherein the output device is an audio output device, a home automation device, or a vehicle.
Clause 7: The system of any of clauses 1-6, wherein the user input includes sensor data.
Clause 8: A method comprising:
   receiving user input related to operation of an output device;
   applying an artificial intelligence (AI) large language model (LLM) to the user input to determine at least one user intent for control of the output device from the user input; and
   sending a communication to the output device to cause the output device to implement the determined at least one user intent.
Clause 9: The method of clause 8, further comprising training the AI LLM with training input.
Clause 10: The method of clause 8 or clause 9, further comprising receiving the user input via an application configured to operate on a computing device.
Clause 11: The method of clause 10, wherein:
   the user input is received as text entered in a text field in the application; or
   the user input is provided as speech received by a microphone of the computing device.
Clause 12: The method of clause 10 or clause 11, further comprising presenting, via the application, a multi-dimensional acoustic visualization to the user, the acoustic visualization comprising relative settings of each of bass and treble, and wherein the application is configured to depict the determined at least one user intent visually on the acoustic visualization.
Clause 13: The method of any of clauses 9-12, wherein determining the at least one user intent from the user input comprises translating the at least one user intent into at least one attribute; and sending the communication to the output device to cause the output device to implement the at least one user intent comprises causing the output device to alter an output characteristic based on the at least one attribute.
Clause 14: The method of any of clauses 8-13, wherein the output device is an audio output device, a home automation device, or a vehicle.
Clause 15: The method of clause 14, wherein the audio output device is a loudspeaker.
Clause 16: A system comprising:
   an artificial intelligence (AI) system configured to:
   receive user input related to operation of an audio output device,
   determine at least one user intent related to control of the audio output device from the user input, and
   send a communication to the audio output device to cause the audio output device to implement at least one instruction for control of the audio output device based on the determined at least one user intent.
Clause 17: The system of clause 16, wherein the AI system comprises a large language model (LLM).
Clause 18: The system of clause 16 or clause 17, further comprising an application configured to operate on a computing device to receive the user input.
Clause 19: The system of any of clauses 16-18, wherein:
   the user input is provided as text entered in a text field in the application; or
   the user input is provided as speech received by a microphone of the computing device.
Clause 20: The system of clause 18 or clause 19, wherein the application is further configured to present a multi-dimensional acoustic visualization to the user, the acoustic visualization comprising relative settings of each of bass and treble, and wherein the application is configured to depict the at least one instruction visually on the acoustic visualization.
Clause 21: The system of any of clauses 16-20, wherein determining the at least one user intent from the user input comprises translating the at least one user intent into at least one acoustical attribute; and sending the communication to the audio output device to cause the audio output device to implement the at least one instruction comprises causing the audio output device to alter an output characteristic based on the at least one acoustical attribute.

It should be understood that the individual operations used in the methods of the present teachings may be performed in any order and/or simultaneously, as long as the teaching remains operable. Furthermore, it should be understood that the apparatus and methods of the present teachings can include any number, or all, of the described examples, as long as the teaching remains operable.

Various embodiments of systems, devices, and methods have been described herein. These embodiments are given only by way of example and are not intended to limit the scope of the claimed inventions. It should be appreciated, moreover, that the various features of the embodiments that have been described may be combined in various ways to produce numerous additional embodiments. Moreover, while various materials, dimensions, shapes, configurations and locations, etc. have been described for use with disclosed embodiments, others besides those disclosed may be utilized without exceeding the scope of the claimed inventions.

Persons of ordinary skill in the relevant arts will recognize that the subject matter hereof may comprise fewer features than illustrated in any individual embodiment described above. The embodiments described herein are not meant to be an exhaustive presentation of the ways in which the various features of the subject matter hereof may be combined. Accordingly, the embodiments are not mutually exclusive combinations of features; rather, the various embodiments can comprise a combination of different individual features selected from different individual embodiments, as understood by persons of ordinary skill in the art. Moreover, elements described with respect to one embodiment can be implemented in other embodiments even when not described in such embodiments unless otherwise noted.

Although a dependent claim may refer in the claims to a specific combination with one or more other claims, other embodiments can also include a combination of the dependent claim with the subject matter of each other dependent claim or a combination of one or more features with other dependent or independent claims. Such combinations are proposed herein unless it is stated that a specific combination is not intended.

Any incorporation by reference of documents above is limited such that no subject matter is incorporated that is contrary to the explicit disclosure herein. Any incorporation by reference of documents above is further limited such that no claims included in the documents are incorporated by reference herein. Any incorporation by reference of documents above is yet further limited such that any definitions provided in the documents are not incorporated by reference herein unless expressly included herein.

For purposes of interpreting the claims, it is expressly intended that "means plus function" interpretation is not to be invoked unless the specific terms "means for" or "step for" are recited in a claim.

## Claims

1. A system comprising:
an artificial intelligence (AI) system configured to:
receive user input related to operation of an output device,
determine at least one user intent from the user input, and
send a communication to the output device to cause the output device to implement at least one instruction based on the determined at least one user intent.

2. The system of claim 1, wherein the AI system comprises a large language model (LLM).

3. The system of claim 2, further comprising a training module communicatively coupled with the LLM to provide training input to the LLM, wherein the LLM is further configured to use the training input to determine the at least one user intent from the user input.

4. The system of any of claims 1-3, wherein the user interacts with the AI system via an application presented via a computing device, wherein optionally the computing device is a smart phone, a laptop, a computer, a tablet, a smart device, or a wearable device.

5. The system of claim 4, wherein the user input is provided as one of free text or speech to the application.

6. The system of claim 5, wherein the output device is an audio output device, a home automation device, or a vehicle.

7. The system of any of claims 1-6, wherein the user input includes sensor data.

8. A method comprising:
receiving user input related to operation of an output device;
applying an artificial intelligence (AI) large language model (LLM) to the user input to determine at least one user intent for control of the output device from the user input; and
sending a communication to the output device to cause the output device to implement the determined at least one user intent.

9. The method of claim 8, further comprising training the AI LLM with training input.

10. The method of claim 8 or claim 9, further comprising receiving the user input via an application configured to operate on a computing device.

11. The method of claim 10, wherein:
the user input is received as text entered in a text field in the application; or
the user input is provided as speech received by a microphone of the computing device.

12. The method of claim 10 or claim 11, further comprising presenting, via the application, a multi-dimensional acoustic visualization to the user, the acoustic visualization comprising relative settings of each of bass and treble, and wherein the application is configured to depict the determined at least one user intent visually on the acoustic visualization.

13. The method of any of claims 9-12, wherein determining the at least one user intent from the user input comprises translating the at least one user intent into at least one attribute; and sending the communication to the output device to cause the output device to implement the at least one user intent comprises causing the output device to alter an output characteristic based on the at least one attribute.

14. The method of any of claims 8-13, wherein the output device is an audio output device, a home automation device, or a vehicle.

15. The method of claim 14, wherein the audio output device is a loudspeaker.
